# EUROPEAN PATENT SPECIFICATION

(11) **EP 3 800 867 B1**
(45) Date of publication and mention of the grant of the patent: **23.10.2024**
(21) Application number: 19822722.5
(22) Date of filing: 19.06.2019
(51) Int. Cl.: H04N 21/222, H04L 67/141

(54) **LOAD BALANCING METHOD AND DEVICE**
LASTENAUSGLEICHSVERFAHREN UND VORRICHTUNG
PROCÉDÉ ET DISPOSITIF D'ÉQUILIBRAGE DE CHARGE

(30) Priority: 20.06.2018 CN 201810641022
(43) Date of publication of application: 07.04.2021
(73) Proprietor: HUAWEI TECHNOLOGIES CO., LTD., Shenzhen, Guangdong 518129 (CN)
(72) Inventor: HAN, Zifa, Shenzhen, Guangdong 518129 (CN); LI, Jin, Shenzhen, Guangdong 518129 (CN); LI, Feng, Shenzhen, Guangdong 518129 (CN)
(74) Representative: Pfenning, Meinig & Partner mbB
(86) International application number: PCT/CN2019/091881
(87) International publication number: WO 2019/242638

(56) References cited:
- EP-A1- 3 211 902
- CN-A- 101 296 238
- CN-A- 101 697 633
- CN-A- 105 095 024
- CN-A- 106 686 085
- ZEUS TECHNOLOGY LIMITED: "ZXTM BLG, Scaling your services with ZXTM Global Load Balancer", INTERNET CITATION, 30 June 2007 (2007-06-30), XP002466005, Retrieved from the Internet <URL:http://www.zeus.com/documents/en/Sc/Scaling_with_ZXTM_GLB.pdf> [retrieved on 20080124]

## Description

### TECHNICAL FIELD

This application relates to the communications field, and in particular, to two load balancing methods and corresponding apparatuses, and a load balancing system.

### BACKGROUND

A content delivery network (CDN) system emerges as traffic volume, website visits, and data traffic in a network increase exponentially. In the CDN system, a user request may be directed to a CDN serving node closest to a user in a CDN server cluster by using a load balancing method such as network address transformation (NAT) or direct routing (DR), so that the user may obtain required content near the CDN server cluster, network congestion can be improved, and a response speed of the user to visit a website can be improved.

However, as CDN server clusters are further distributedly deployed, a plurality of CDN servers may be deployed in different network segments. As a result, conventional load balancing modes such as the NAT and the DR become unavailable. Therefore, how to perform effective load balancing in a distributed CDN scenario becomes an urgent problem to be resolved.

European patent application EP 3 211 902 A1 provides an Hyper Text Transfer Protocol Live Streaming (HLS) based capability control method and service system and server load balancing (SLB) server. The HLS-based capability control service system includes an SLB server and one or more HLS video servers. The SLB server is configured to receive an HLS HTTP request from a terminal, redirect the HLS HTTP request to an HLS video server in an HTTP 302 manner, and return a service address of the specified HLS video server to the terminal; and the HLS video server is configured to receive an HTTP short connection request from the terminal, monitor a request status of each terminal in real time, and count online terminal users according to terminals that initiate requests.

### SUMMARY

Embodiments of this invention provide two load balancing methods by a terminal device and a load balancing device and corresponding apparatuses, and a load balancing system, to perform effective load balancing in a distributed CDN scenario. The invention is defined by the appended claims.

### BRIEF DESCRIPTION OF DRAWINGS

FIG. 1 is a schematic diagram 1 of a communications architecture to which a load balancing method is applied according to an embodiment of this application;
FIG. 2 is a schematic diagram 2 of a communications architecture to which a load balancing method is applied according to an embodiment of this application;
FIG. 3 is a schematic diagram of signal interaction in a load balancing method according to an embodiment of this application;
FIG. 4 is a schematic structural diagram 1 of a terminal device according to an embodiment of this application;
FIG. 5 is a schematic structural diagram 2 of a terminal device according to an embodiment of this application;
FIG. 6 is a schematic structural diagram 1 of a CDN server according to an embodiment of this application;
FIG. 7 is a schematic structural diagram 2 of a CDN server according to an embodiment of this application;
FIG. 8 is a schematic structural diagram 1 of a load balancing device according to an embodiment of this application; and
FIG. 9 is a schematic structural diagram 2 of a load balancing device according to an embodiment of this application.

### DESCRIPTION OF EMBODIMENTS

Embodiments of this application provide a load balancing method and apparatus, applicable to a load balancing scenario. For example, the method and the apparatus are applied to a load balancing scenario of a distributed CDN. The load balancing scenario of the distributed CDN may be, for example, a scenario in which a CDN server cluster in a CDN system is deployed in a plurality of different network segments.

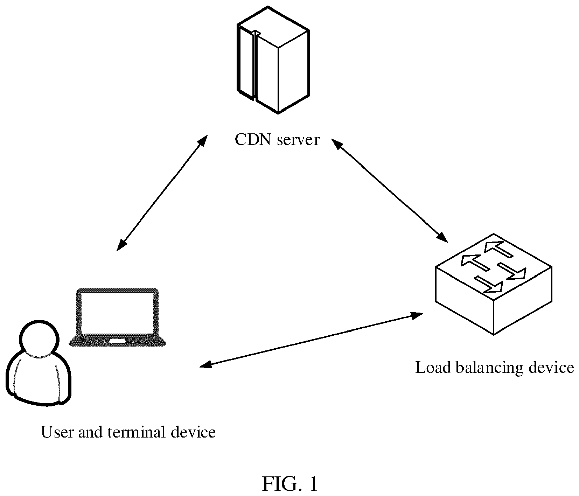

FIG. 1 is a schematic diagram of a communications architecture to which a load balancing method is applied according to an embodiment of this application. The communications architecture includes a terminal device, a load balancing device, and a CDN server. The load balancing device may be, for example, a load balancing (SLB) server or a network load balancing (NLB) server. The terminal device is configured to receive an operation of a user and initiate a content request (for example, request to download a video). The load balancing device is configured to: parse the content request, determine, according to a load balancing policy, a CDN server corresponding to the terminal device, and forward the content request to the CDN server. The CDN server is configured to parse the content request, and may directly transmit corresponding content and an IP address of the CDN server to the terminal device or may transmit corresponding content and an IP address of the CDN server to the terminal device by using the load balancing device. The terminal device determines, based on a content size and a service requirement, whether to establish a direct connection to the CDN server, to request, from the CDN server, transmission of subsequent content that is not transmitted.

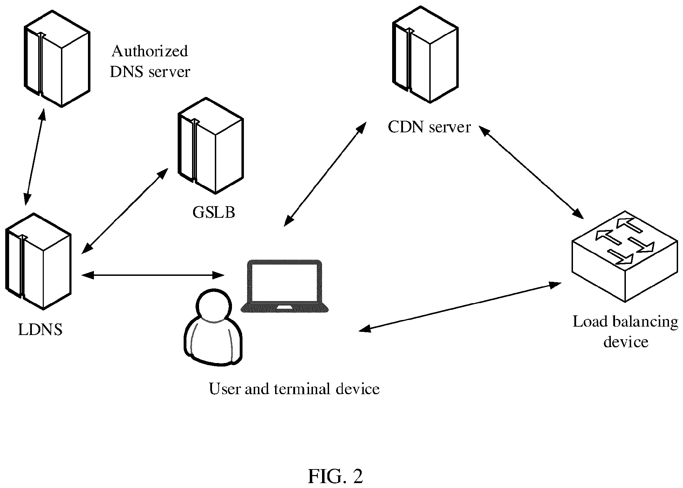

In a possible design, as shown in FIG. 2, the communications architecture of the load balancing method may further include a local domain name system (LDNS) server (LDNS for short), an authorized domain name system (DNS) server (such as an authorized DNS server of a service provider (SP)), and a global server load balance (GSLB) device (GSLB for short). The LDNS, the authorized DNS server, and the GSLB are mainly configured to provide an IP address of the load balancing device to the terminal device, so that the terminal device sends the content request to the load balancing device based on the IP address of the load balancing device.

The following describes the technical solutions in the embodiments of this application with reference to the accompanying drawings in the embodiments of this application. In the descriptions of this application, "a plurality of' means at least two. In addition, to clearly describe the technical solutions in the embodiments of this application, terms such as "first" and "second" are used in the embodiments of this application to distinguish between same items or similar items that have basically the same functions or purposes. A person skilled in the art may understand that the terms such as "first" and "second" do not limit a quantity or an execution sequence, and the terms such as "first" and "second" do not mean being definitely different either.

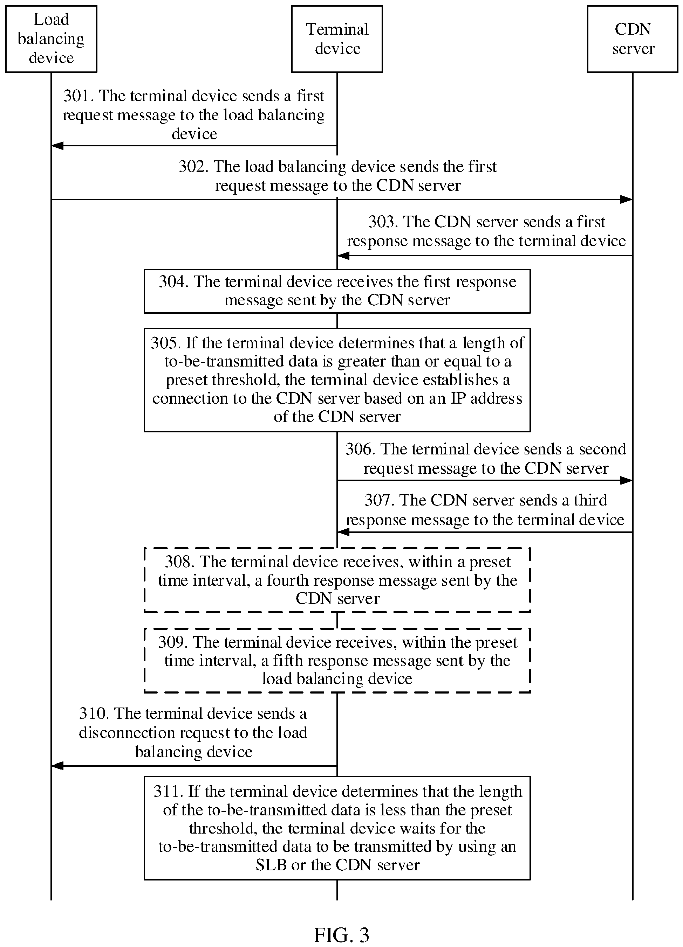

An embodiment of this application provides a load balancing method. An example in which a load balancing device is an SLB server (which is referred to as an SLB for short below) is used for description. As shown in FIG. 3, the method includes the following steps.

301. The terminal device sends a first request message to the load balancing device, where the first request message is used to request to-be-transmitted data and an IP address of a CDN server.

It should be noted that before the terminal device sends the first request message to the SLB, the terminal device may obtain an IP address of the SLB by using the LDNS, the authorized DNS server, and the GSLB. For example, the user may first click a video file (for example, a uniform resource locator (URL) of the video file may be http://movie.netitv.com.cn/abc.mp4), so that the terminal device sends the first request message to the LDNS. The first request message is used to request the to-be-transmitted data and the IP address of the CDN server. The to-be-transmitted data is content of the video file, and the CDN server is a CDN server that may provide the content of the video file to the terminal device and that is closest to the terminal device. After receiving the first request message, the LDNS may request the authorized DNS server to parse the domain name of the video file (which is movie.netitv.com.cn). The authorized DNS server determines cname of the domain name (for example, movie.netitv.cdn.cn) based on the domain name of the video file, and returns the cname to the LDNS and an IP address of the GSLB that is responsible for parsing the cname. After receiving the cname and the IP address of the GSLB that is responsible for parsing the cname, the LDNS requests the GSLB to parse the cname. The GSLB determines, based on the cname and an IP address of the LDNS, an SLB that is closest to the terminal device, and returns the IP address of the SLB to the LDNS. The LDNS returns the IP address of the SLB to the terminal device. Therefore, the terminal device may send the first request message to the SLB to request the SLB to provide a service.

In a possible design, fields included in the first request message corresponding to the video file are as follows:
GET http://webpage.com HTTP/1.1
Host: vali.cp31.ott.cibntv.net
Proxy-Connection: keep-alive
User-Agent: Mozilla/5.0 (Windows NT 6.1; Win64; x64)
X-Requested-With: ShockwaveFlash/26.0.0.137
Accept: */*
Real-Server: IP/32bits
Accept-Encoding: gzip, deflate
Accept-Language: zh-CN,zh;q=0.8,en;q=0.6

The "GET http://webpage.com HTTP/1.1" field is used to indicate a used transmission protocol.

The "Host: vali.cp31.ott.cibntv.net" field is used to indicate server information.

The "Proxy-Connection: keep-alive" field is used to indicate that a connected mode is to maintain connection.

The "User-Agent: Mozilla/5.0 (Windows NT 6.1; Win64; x64)" field is used to indicate a browser version.

The "X-Requested-With: ShockwaveFlash/26.0.0.137" field is used to indicate a player version.

The "Accept: */*" field is used to indicate a reserved field.

The "Real-Server: IP/32bits" field is used to indicate a 32-bit IP address that is returned to the CDN server.

The "Accept-Encoding: gzip, deflate" field is used to indicate a compression type.

The "Accept-Language: zh-CN,zh;q=0.8,en;q=0.6" field is used to indicate a language type.

Step 302: The load balancing device sends the first request message to the CDN server.

The SLB receives the first request message sent by the terminal device, and selects, for the terminal device according to a load balancing policy, a CDN server that may serve the terminal device and that is closer to the terminal device. Then, the SLB sends the first request message to the CDN server. The load balancing policy may include at least one of the following: a network status, a load status, content existence, or a network delay of a distributed CDN server.

In a possible design, the SLB may send the first request message to the CDN server by using an IP tunnel (tunnel). Specifically, after receiving the first request message from the terminal device, the SLB encapsulates, into the first request message, a source IP address (namely, the IP address of the SLB) that may be across network segments, and forwards, in a data packet form, the encapsulated first request message to the CDN server by using the IP tunnel. After receiving the first request message sent by the SLB, the CDN server returns a request result to the terminal device based on the IP address of the SLB. A destination IP address carried in a message header of the first request message is the IP address of the SLB, and therefore the request result should be returned to the terminal device by using the IP address of the SLB as the source address. The SLB no longer performs a task of forwarding, to the terminal device, an IP data packet returned from the CDN server, and this reduces load of the SLB.

303. The CDN server sends a first response message to the terminal device, where the first response message includes a length of the to-be-transmitted data and the IP address of the CDN server.

The CDN server receives the first request message sent by the SLB. Then, the CDN server may send the length of the to-be-transmitted data and the IP address of the CDN server to the terminal device by using an initial packet. In other words, the first response message may include a first data packet that is sent by the CDN server to the terminal device after the CDN server receives the first request message.

304. The terminal device receives the first response message sent by the CDN server.

It should be noted that a source IP address of the first response message is the IP address of the SLB. In other words, the CDN server sends the first response message in a name of the SLB (in other words, the IP address of the SLB is used as a sending address and an IP address of the terminal device is used as a destination address). Although the CDN server directly sends data to the terminal device by bypassing the SLB when the CDN server sends the data, the terminal device still considers that the data packet received by the terminal device is sent by the SLB, to send an acknowledgement (ACK) packet of the data packet to the SLB, and the SLB forwards the ACK packet to the CDN server again by using the IP tunnel. In other words, the ACK packet returned by the terminal device needs to pass through the SLB to reach the CDN server. In a high concurrent request, the SLB is prone to become a hotspot device (an Http connection to a large quantity of terminal devices needs to be maintained). For the foregoing reasons, the terminal device may continue to perform steps 305 to 309, to avoid pressure and risk of high concurrent request access faced by the SLB.

305. If the terminal device determines that the length of the to-be-transmitted data is greater than or equal to a preset threshold, the terminal device establishes a connection to the CDN server based on the IP address of the CDN server.

It should be noted that before the terminal device establishes the connection to the CDN server based on the IP address of the CDN server, the terminal device may receive a second response message sent by the CDN server, where the second response message includes a part of the to-be-transmitted data. In a possible design, the CDN server directly sends the second response message to the terminal device, where a source IP address of the second response message is an IP address of the load balancing device. In another possible design, the CDN server sends the second response message to the terminal device by using the SLB. In this way, before the terminal device establishes the connection to the CDN server, the terminal device may receive the part of the to-be-transmitted data from the CDN server, so that data transmission can be quickly started, thereby improving data transmission efficiency.

According to an example in step 301, if the terminal device determines that a size of the content of the video file is greater than or equal to the preset threshold, the terminal device sends a connection establishment request, such as an Http request, to the CDN server, to establish a new TCP connection, and receives subsequent content of the to-be-transmitted data by using the new TCP connection. The subsequent content of the to-be-transmitted data, namely, data that is in the to-be-transmitted data and that is not transmitted, refers to data in the to-be-transmitted data other than some data included in the second response message. The preset threshold may be determined based on an RTT between the terminal device and the CDN server or between the terminal device and the SLB. The preset threshold may be, for example, but is not limited to, 100K, 500K, 1M, 10M, 100M, or the like.

306. After the terminal device establishes the connection to the CDN server, the terminal device sends a second request message to the CDN server, where the second request message is used to request the data that is in the to-be-transmitted data and that is not transmitted.

In a possible design, the terminal device may obtain, by using a resumable data transfer technology, the data that is in the to-be-transmitted data and that is not transmitted. For example, the terminal device may send an HTTP obtaining request (the second request message) to the CDN server, where the HTTP obtaining request includes a start position of the data that is in the to-be-transmitted data and that is not transmitted. For example, it is assumed that the terminal device has received 1024 bytes (bytes) of data by using the second response message, content of the Http get request may include: Range: 1024+, and Range: 1024+ is used to indicate the start position of the data that is in the to-be-transmitted data to be requested and that is not transmitted.

307. The CDN server sends a third response message to the terminal device.

After receiving the second request message, the CDN server may send the third response message to the terminal device. The terminal device receives the third response message sent by the CDN server, where the third response message includes the data that is in the to-be-transmitted data and that is not transmitted, and a source IP address of the third response message is the IP address of the CDN server.
In a possible design, within a preset time interval after the terminal device sends the second request message to the CDN server, the terminal device may perform step 308 or step 309 to maintain stability of data transmission, thereby reducing jitter.

308. The terminal device receives, within the preset time interval, a fourth response message sent by the CDN server.

In a possible design, after the terminal device sends the second request message to the CDN server, the terminal device may receive, within the preset time interval, the fourth response message sent by the CDN server. The fourth response message includes the part of the to-be-transmitted data, and a source IP address of the fourth response message is the IP address of the load balancing device. In other words, terminal device receives, within the preset time interval, the fourth response message sent by the CDN server that functions as the SLB. The preset time interval is determined based on the RTT between the terminal device and the CDN server. For example, the preset time interval may be 0.5 RTT, 1 RTT, 1.5 RTT, or the like.

309. The terminal device receives, within the preset time interval, a fifth response message sent by the load balancing device.

In a possible design, after the terminal device sends the second request message to the CDN server, the terminal device receives, within the preset time interval, the fifth response message sent by the SLB, where the fifth response message includes the part of the to-be-transmitted data. The terminal device receives, within the preset time interval, the fifth response message sent by the CDN server by using the SLB. The preset time interval is determined based on the RTT between the terminal device and the load balancing device. For example, the preset time interval may be 0.5 RTT, 1 RTT, 1.5 RTT, or the like.

310. The terminal device sends a disconnection request to the load balancing device, where the disconnection request is used to instruct to disconnect the terminal device from the load balancing device.

The load balancing device receives the disconnection request sent by the terminal device, and the load balancing device sends a disconnection response to the terminal device, and disconnects a link between the load balancing device and the terminal device.

In other words, after the terminal device establishes the connection to the CDN server, the terminal device may disconnect from the SLB. In this way, a data channel between the terminal device and the SLB is switched to a new data transmission channel between the terminal device and the CDN server, to reduce resource consumption of the SLB, and decrease a quantity of long connections of the SLB (that is, the SLB does not need to maintain the Http connection to the large quantity of terminal devices), thereby reducing pressure and risk when the SLB faces high concurrent request access.

In addition, if the terminal device determines that the length of the to-be-transmitted data is less than the preset threshold, the terminal device performs step 311.

311. If the terminal device determines that the length of the to-be-transmitted data is less than the preset threshold, the terminal device waits for the to-be-transmitted data to be transmitted by using the SLB or the CDN server.

When the terminal device requests a small file (a length of to-be-transmitted data corresponding to the small file is less than the preset threshold), because a delay of re-establishing a connection between the terminal device and the CDN server is relatively long, the terminal device does not need to establish a connection to the CDN server, and only needs to wait for the small file to be transmitted by using the SLB or the CDN server. The CDN server sends the small file to the terminal device in the name of the SLB or by using the SLB. In this way, in a small file transmission process, a download delay is not excessively long. In addition, because transmission duration of the small file is relatively short, the SLB does not need to maintain a connection to the terminal device for a long time. In other words, the SLB is not occupied for a long time, and the load of the SLB is not increased.

It should be noted that steps 301 to 311 can be executed in a different sequence, and a sequence of steps executed is not specifically limited in this embodiment.

In this embodiment of this application, the terminal device may establish a direct connection to CDN servers in different network segments based on the IP address of the CDN server. Compared with a conventional load balancing mode such as NAT and DR in which load balancing across network segments cannot be performed, in this embodiment of this application, effective load balancing can be performed in a distributed CDN scenario. In addition, based on the foregoing solution, the load balancing device may forward, to the CDN server, the first request message sent by the terminal device, so that data transmission between the terminal device and the CDN server can be quickly started. In addition, after establishing the connection to the CDN server, the terminal device may further receive, from the CDN server, the data that is in the to-be-transmitted data and that is not transmitted. In this way, a transmission delay when the terminal device receives the to-be-transmitted data can be reduced, and data transmission efficiency is improved.

The foregoing mainly describes the solutions provided in the embodiments of this application from a perspective of the terminal device, the CDN server, and the load balancing device. It may be understood that, to implement the foregoing functions, the terminal device, the CDN server, and the load balancing device include corresponding hardware structures and/or software modules for performing the functions. A person skilled in the art should easily be aware that, in combination with the algorithm steps described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of this application.

In the embodiments of this application, the terminal device, the CDN server, and the load balancing device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, division into the modules is an example, is merely logical function division, and may be other division in an actual implementation.

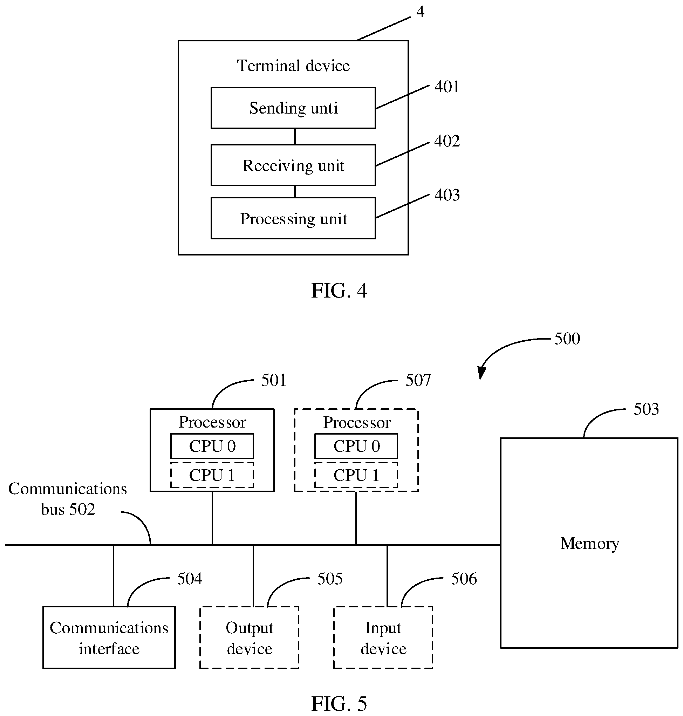

When each functional module is obtained through division based on each corresponding function, FIG. 4 is a possible schematic structural diagram 1 of the terminal device 4 in the foregoing embodiment. The terminal device includes: a sending unit 401, a receiving unit 402 and a processing unit 403. In this embodiment of this application, the sending unit 401 may be configured to send a first request message to a load balancing device, where the first request message is used to request to-be-transmitted data and an IP address of a CDN server. The receiving unit 402 is configured to receive a first response message sent by the CDN server, where the first response message includes a length of the to-be-transmitted data and the IP address of the CDN server, and a source IP address of the first response message is an IP address of the load balancing device. The processing unit 403 is configured to: if the processing unit 403 determines that the length of the to-be-transmitted data is greater than or equal to a preset threshold, establish a connection to the CDN server based on the IP address of the CDN server. The sending unit 401 may be configured to support the terminal device in performing processes 301, 306, and 310 in FIG. 3. The receiving unit 402 is configured to support the terminal device in performing at least one of the following processes in FIG. 3: processes 304, 308, 309, or 310. The processing unit 403 is configured to support the terminal device in performing processes 305 and 311 in FIG. 3.

In a possible design, the terminal device may be implemented by using a structure (an apparatus or a system) in FIG. 5.

FIG. 5 is a schematic diagram of a structure according to an embodiment of this application. A structure 500 includes at least one processor 501, a communications bus 502, a memory 503, and at least one communications interface 504.

The processor 501 may be a central processing unit (CPU), a micro processing unit, a general-purpose processing unit, a digital signal processor (DSP), an application-specific integrated circuit (ASIC), a field programmable gate array (FPGA) or another programmable logic device, a transistor logic device, a hardware component, or any combination thereof.

The communications bus 502 may include a channel in which information is transmitted between the foregoing components.

The communications interface 504 is any apparatus such as a transceiver, and is configured to communicate with another device or communications network, such as Ethernet, a radio access network (RAN), or a wireless local area network (WLAN).

The memory 503 may be a read-only memory (ROM) or another type of static storage device that can store static information and an instruction, or a random access memory (RAM) or another type of dynamic storage device that can store information and an instruction, or may be an electrically erasable programmable read-only memory (EEPROM), a compact disc read-only memory (CD-ROM) or other compact disc storage, optical disc storage (including a compact disc, a laser disc, an optical disc, a digital versatile disc, a Blu-ray disc, or the like), a disk storage medium or another magnetic storage device, or any other medium that can be configured to carry or store expected program code having an instruction or data structure form and that can be accessed by a computer. However, this is not limited. The memory may exist independently and is connected to the processing unit by using a bus. The memory may be alternatively integrated with the processing unit.

The memory 503 is configured to store application program code that executes the solution in this application, and the processor 501 controls execution of the solution in this application. The processor 501 is configured to execute the application program code stored in the memory 503, to implement the function of the method in this application.

During specific implementation, in an embodiment, the processor 501 may include one or more CPUs, for example, a CPU 0 and a CPU 1 in FIG. 5.

In a specific implementation, in an embodiment, the structure 500 may include a plurality of processors, for example, the processor 501 and a processor 507 in FIG. 5. Each of the processors may be a single-CPU (single-CPU) processor, or may be a multi-CPU (multi-CPU) processor. The processor herein may be one or more devices, circuits, and/or processing cores for processing data (for example, a computer program instruction).

In specific implementation, in an embodiment, the structure 500 may further include an output device 505 and an input device 506. The output device 505 communicates with the processor 501, and may display information in a plurality of manners. For example, the output device 505 may be a liquid crystal display (LCD), a light emitting diode (LED) display device, a cathode ray tube (CRT) display device, or a projector (projector). The input device 506 communicates with the processor 501, and may receive a user input in a plurality of manners. For example, the input device 506 may be a mouse, a keyboard, a touchscreen device, or a sensing device.

In specific implementation, the structure 500 may be a desktop computer, a portable computer, a network server, a personal digital assistant (PDA), a mobile phone, a tablet computer, a wireless terminal device, a communications device, an embedded device, or a device with a structure similar to that in FIG. 5. A type of the structure 500 is not limited in this embodiment of this application.

The transceiver may be configured to perform receiving and sending of information performed by the terminal device in the foregoing method embodiment.

The processor 501 may be configured to perform other processing except the receiving and sending of information performed by the terminal device in the foregoing method embodiment.

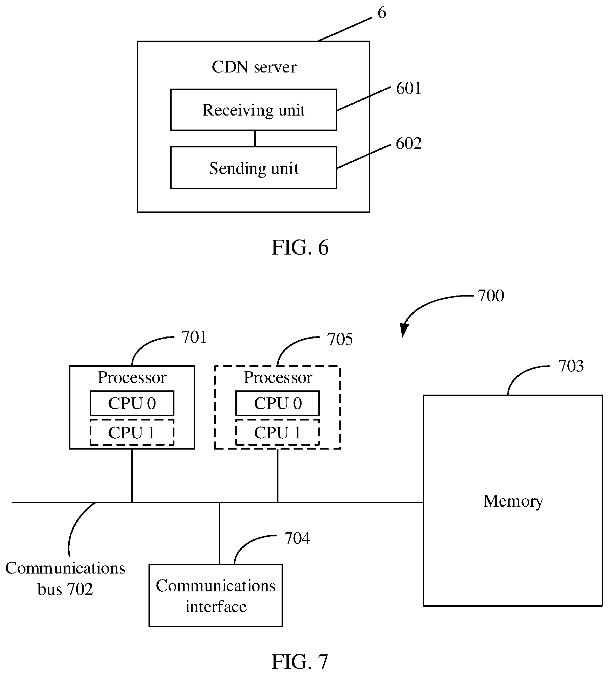

FIG. 6 is a possible schematic structural diagram 1 of the CDN server 6 used in the foregoing embodiment when each functional module is divided for each corresponding function. The CDN server includes a receiving unit 601 and a sending unit 602. In this embodiment of this application, the receiving unit 601 is configured to receive a first request message sent by a load balancing device, where the first request message is used to request to-be-transmitted data and an IP address of a CDN server. The sending unit 602 is configured to send a first response message to a terminal device, where the first response message includes a length of the to-be-transmitted data and the IP address of the CDN server, so that the terminal device determines, based on the length of the to-be-transmitted data, whether to establish a connection to the CDN server. The sending unit 602 is configured to support the CDN server in performing processes 303 and 307 in FIG. 3.

In a possible design, the CDN server may be implemented by using a structure (an apparatus or a system) in FIG. 7.

FIG. 7 is a schematic diagram of a structure according to an embodiment of this application. A structure 700 includes at least one processor 701, a communications bus 702, a memory 703, and at least one communications interface 704.

The processor 701 may be a CPU, a micro processing unit, a general-purpose processing unit, a DSP, an ASIC, an FPGA or another programmable logic device, a transistor logic device, a hardware component, or any combination thereof.

The communications bus 702 may include a channel in which information is transmitted between the foregoing components.

The communications interface 704 is any apparatus such as a transceiver, and is configured to communicate with another device or communications network, such as Ethernet, a RAN, or a WLAN.

The memory 703 may be a ROM or another type of static storage device capable of storing static information and instructions, or a RAM or another type of dynamic storage device capable of storing information and instructions; or may be an EEPROM, a CD-ROM, or other compact disc storage or optical disc storage (including a compressed optical disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently and is connected to the processing unit by using a bus. The memory may be alternatively integrated with the processing unit.

The memory 703 is configured to store application program code that executes the solution in this application, and the processor 701 controls execution of the solution in this application. The processor 701 is configured to execute the application program code stored in the memory 703, to implement the function of the method in this application.

During specific implementation, in an embodiment, the processor 701 may include one or more CPUs, for example, a CPU 0 and a CPU 1 in FIG. 7.

In a specific implementation, in an embodiment, the structure 700 may include a plurality of processors, for example, the processor 701 and a processor 705 in FIG. 7. Each of these processors may be a single-core processor, or may be a multi-core processor. The processor herein may be one or more devices, circuits, and/or processing cores for processing data (for example, a computer program instruction).

The transceiver may be configured to perform receiving and sending of information performed by the CDN server in the foregoing method embodiment.

The processor 701 may be configured to perform other processing except the receiving and sending of information performed by the CDN server in the foregoing method embodiment.

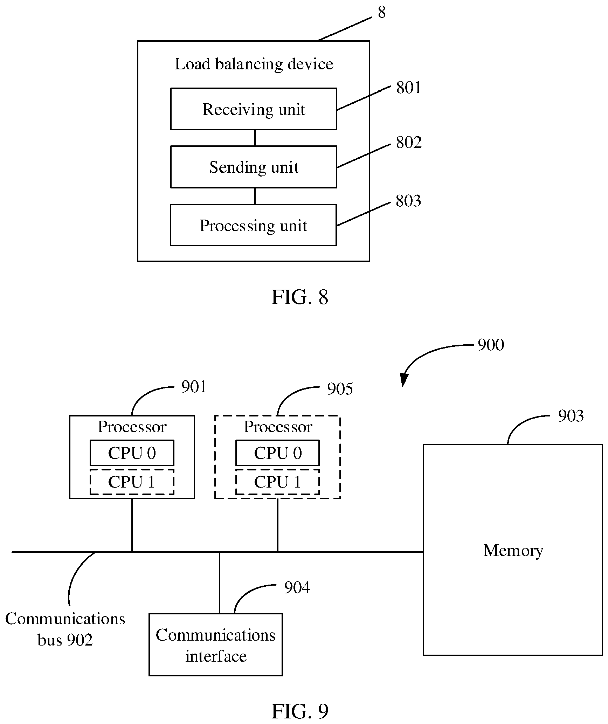

When each functional module is obtained through division based on each corresponding function, FIG. 8 is a possible schematic structural diagram 1 of a load balancing device 8 used in the foregoing embodiment. The load balancing device includes a receiving unit 801, a sending unit 802, and a processing unit 803. In this embodiment of this application, the receiving unit 801 may be configured to receive a first request message sent by a terminal device, where the first request message is used to request to-be-transmitted data and an IP address of a CDN server. The sending unit 802 is configured to send the first request message to the CDN server, so that the CDN server sends a first response message to the terminal device, where the first response message includes a length of the to-be-transmitted data and the IP address of the CDN server. The processing unit 803 is configured to disconnect a link between the load balancing device and the terminal device. The sending unit 802 is configured to support the load balancing device in performing process 302 in FIG. 3.

In a possible design, the load balancing device may be implemented by using a structure (an apparatus or a system) in FIG. 9.

FIG. 9 is a schematic diagram of a structure according to an embodiment of this application. A structure 900 includes at least one processor 901, a communications bus 902, a memory 903, and at least one communications interface 904.

The processor 901 may be a CPU, a micro processing unit, a general-purpose processing unit, a DSP, an ASIC, an FPGA or another programmable logic device, a transistor logic device, a hardware component, or any combination thereof.

The communications bus 902 may include a channel in which information is transmitted between the foregoing components.

The communications interface 904 is any apparatus such as a transceiver, and is configured to communicate with another device or communications network, such as Ethernet, a RAN, or a WLAN.

The memory 903 may be a ROM or another type of static storage device capable of storing static information and instructions, or a RAM or another type of dynamic storage device capable of storing information and instructions; or may be an EEPROM, a CD-ROM, or other compact disc storage or optical disc storage (including a compressed optical disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently and is connected to the processing unit by using a bus. The memory may be alternatively integrated with the processing unit.

The memory 903 is configured to store application program code that executes the solution in this application, and the processor 901 controls execution of the solution in this application. The processor 901 is configured to execute the application program code stored in the memory 903, to implement the function of the method in this application.

During specific implementation, in an embodiment, the processor 901 may include one or more CPUs, for example, a CPU 0 and a CPU 1 in FIG. 9.

In a specific implementation, in an embodiment, the structure 900 may include a plurality of processors, for example, the processor 901 and a processor 905 in FIG. 9. Each of these processors may be a single-core processor, or may be a multi-core processor. The processor herein may be one or more devices, circuits, and/or processing cores for processing data (for example, a computer program instruction).

The transceiver may be configured to perform receiving and sending of information performed by the load balancing device in the foregoing method embodiment.

The processor 901 may be configured to perform other processing except the receiving and sending of information performed by the load balancing device in the foregoing method embodiment.

An embodiment of this application further provides a computer-readable storage medium, including an instruction. When the instruction runs on a computer, the computer is enabled to perform the method according to any one of the foregoing embodiments.

An embodiment of this application further provides a computer program product including an instruction. When the computer program product runs on the computer, the computer is enabled to perform the method according to any one of the foregoing embodiments.

An embodiment of this application further provides an apparatus. The apparatus exists in a product form of a chip. The apparatus includes a processor, a memory, and a transceiver component. The transceiver component includes an input/output circuit. The memory is configured to store a computer executable instruction. The processor implements the method according to any one of the foregoing embodiments by performing the computer executable instruction stored in the memory. In this case, the method provided in this embodiment of this application may be executed by a chip.

An embodiment of this application further provides a communications system, including at least a first device, a second device, and a third device. The first device may be any terminal device provided in the foregoing embodiment, the second device may be any load balancing device provided in the foregoing embodiment, and the third device may be any CDN server provided in the foregoing embodiment.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement or improvement made based on technical solutions of this application shall fall within the protection scope of this application.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A load balancing method, comprising:
sending (301), by a terminal device, a first request message to a load balancing device, wherein the first request message is used to request to-be-transmitted data and an internet protocol, IP, address of a content delivery network, CDN, server that may provide the to-be-transmitted data;
selecting, by the load balancing device, for the terminal device based on a load balancing policy, a CDN that may serve the terminal;
sending, by the load balancing device, the first request message to the selected CDN server by using an IP tunnel;
receiving (304), by the terminal device, a first response message sent by the CDN server, wherein the first response message comprises a length of the to-be-transmitted data and the IP address of the CDN server, and a source IP address of the first response message is an IP address of the load balancing device; and
sending, by the terminal device, an acknowledgement, ACK, packet of the first response message to the load balancing device, wherein the IP destination address of the ACK packet is the IP address of the load balancing device,
forwarding, by the load balancing device, the ACK packet to the selected CDN server by using the IP tunnel;
when the terminal device determines that the length of the to-be-transmitted data is greater than or equal to a preset threshold, establishing (305), by the terminal device, a connection to the CDN server based on the IP address of the CDN server,
receiving, by the terminal device, subsequent content of the to-be-transmitted data by using the connection with the CDN server.

2. The load balancing method according to claim 1, wherein the method further comprises:
sending (310), by the terminal device, a disconnection request to the load balancing device, wherein the disconnection request is used to instruct to disconnect the terminal device from the load balancing device.

3. The load balancing method according to claim 1 or 2, wherein before the establishing (305), by the terminal device, a connection to the CDN server based on the IP address of the CDN server, the method further comprises:
receiving, by the terminal device, a second response message sent by the CDN server, wherein the second response message comprises a part of the to-be-transmitted data, and a source IP address of the second response message is the IP address of the load balancing device.

4. The load balancing method according to any one of claims 1 to 3, wherein after the establishing (305), by the terminal device, a connection to the CDN server, the method further comprises:
sending (306), by the terminal device, a second request message to the CDN server, wherein the second request message is used to request data that is in the to-be-transmitted data and that is not transmitted; and
receiving (307), by the terminal device, a third response message sent by the CDN server, wherein the third response message comprises the data that is not transmitted, and a source IP address of the third response message is the IP address of the CDN server.

5. The load balancing method according to claim 4, wherein the sending (306), by the terminal device, a second request message to the CDN server comprises:
sending, by the terminal device, a hypertext transfer protocol, HTTP, obtaining request to the CDN server, wherein the HTTP obtaining request comprises a start position of the data that is in the to-be-transmitted data and that is not transmitted.

6. A load balancing method carried out in a load balancing device, comprising:
receiving (301), by the load balancing device, a first request message sent by a terminal device, wherein the first request message is used to request to-be-transmitted data and an internet protocol, IP, address of a content delivery network, CDN, server that may provide the to-be-transmitted data; and
selecting, by the load balancing device, for the terminal device according to a load balancing policy, a CDN server that may serve the terminal device;
sending (302), by the load balancing device, the first request message to the selected CDN server by using an IP tunnel;
receiving, by the load balancing device, an acknowledgement, ACK, packet, sent by the terminal device, of a first response message to the load balancing device, wherein the IP destination address of the ACK packet is the IP address of the load balancing device and wherein the first response message was sent by the CDN server to the terminal device, wherein the first response message comprises a length of the to-be-transmitted data and the IP address of the SCN server, and a source IP address of the first response message is an IP address of the load balancing device;
forwarding, by the load balancing device, the ACK packet to the selected CDN server by using the IP tunnel.

7. The load balancing method according to claim 6, wherein the method further comprises:
receiving (310), by the load balancing device, a disconnection request sent by the terminal device, wherein the disconnection request is used to instruct to disconnect the terminal device from the load balancing device; and
sending, by the load balancing device, a disconnection response to the terminal device, and disconnecting a link between the load balancing device and the terminal device.

8. A terminal device (4), comprising:
a sending unit (401), configured to send a first request message to a load balancing device, wherein the first request message is used to request to-be-transmitted data and an internet protocol, IP, address of a content delivery network, CDN, server that may provide the to-be-transmitted data;
a receiving unit (402), configured to receive a first response message sent by the CDN server that may serve the terminal device, wherein the first response message comprises a length of the to-be-transmitted data and the IP address of the CDN server, and a source IP address of the first response message is an IP address of the load balancing device; and
the sending unit (401) is further configured to send an acknowledgement, ACK, packet of the first response message to the load balancing device, wherein the IP destination address of the ACK packet is the IP address of the load balancing device,
a processing unit (403), configured to: when the processing unit (403) determines that the length of the to-be-transmitted data is greater than or equal to a preset threshold, establish a connection to the CDN server based on the IP address of the CDN server,
the receiving unit (402) is further configured to receive subsequent content of the to-be-transmitted data by using the connection with the CDN server.

9. The terminal device (4) according to claim 8, wherein the sending unit (401) is further configured to:
send a disconnection request to the load balancing device, wherein the disconnection request is used to instruct to disconnect the terminal device (4) from the load balancing device.

10. The terminal device (4) according to claim 8 or 9, wherein the receiving unit (402) is further configured to:
receive a second response message sent by the CDN server, wherein the second response message comprises a part of the to-be-transmitted data, and a source IP address of the second response message is the IP address of the load balancing device.

11. The terminal device (4) according to any one of claims 8 to 10, wherein the sending unit (401) is further configured to:
send a second request message to the CDN server, wherein the second request message is used to request data that is in the to-be-transmitted data and that is not transmitted; and
the receiving unit (402) is further configured to receive a third response message sent by the CDN server, wherein the third response message comprises the data that is not transmitted, and a source IP address of the third response message is the IP address of the CDN server.

12. The terminal device (4) according to claim 11, wherein the sending unit (401) is configured to:
send a hypertext transfer protocol, HTTP, obtaining request to the CDN server, wherein the HTTP obtaining request comprises a start position of the data that is in the to-be-transmitted data and that is not transmitted.

13. A load balancing device (8), comprising:
a receiving unit (801), configured to receive a first request message sent by a terminal device, wherein the first request message is used to request to-be-transmitted data and an internet protocol IP address of a content delivery network, CDN, server that may provide the to-be-transmitted data; and
a sending unit (802), configured to select, for the terminal device according to a load balancing policy, a CDN server that may serve the terminal device, and send the first request message to the CDN server by using an IP tunnel,
the receiving unit (801), further configured to receive an acknowledgement, ACK, packet, sent by the terminal device, of a first response message to the load balancing device, wherein the IP destination address of the ACK packet is the IP address of the load balancing device and wherein the first response message was sent by the CDN server to the terminal device, wherein the first response message comprises a length of the to-be-transmitted data and the IP address of the SCN server, and a source IP address of the first response message is an IP address of the load balancing device;
the sending unit (802) is further configured to forward the ACK packet to the selected CDN server by using the IP tunnel.

14. The load balancing device (8) according to claim 13, wherein the receiving unit (801) is further configured to:
receive a disconnection request sent by the terminal device, wherein the disconnection request is used to instruct to disconnect the terminal device from the load balancing device (8); and
the sending unit (802) is further configured to: send a disconnection response to the terminal device, and disconnect a link between the load balancing device (8) and the terminal device by using a processing unit (803).

15. A load balancing system, comprising a terminal device (4, 500), a load balancing device (8, 900), and a content delivery network, CDN, server (6, 700), wherein:
the terminal device (4, 500) is configured to send a first request message to the load balancing device (8, 900), wherein the first request message is used to request to-be-transmitted data and an internet protocol, IP, address of the CDN server (6, 700) that may provide the to-be-transmitted data;
the load balancing device (8, 900) is configured to receive the first request message sent by the terminal device (4, 500);
the load balancing device (8, 900) is further configured to select, for the terminal device according to a load balancing policy, a CDN server that may serve the terminal device, and send the first request message to the selected CDN server (6, 700) by using an IP tunnel;
the CDN server (6, 700) is configured to receive the first request message sent by the load balancing device (8, 900);
the CDN server (6, 700) is further configured to send a first response message to the terminal device (4, 500), wherein the first response message comprises a length of the to-be-transmitted data and the IP address of the CDN server (6, 700), and a source IP address of the first response message is an IP address of the load balancing device (8, 900);
the terminal device (4, 500) is further configured to receive the first response message sent by the CDN server (6, 700); and
the terminal device (4, 500) is further configured to send an acknowledgement, ACK, packet of the first response message to the load balancing device, wherein the IP destination address of the ACK packet is the IP address of the load balancing device,
the load balancing device (8, 900) is further configured to forward the ACK packet to the selected CDN server by using the IP tunnel;
the terminal device (4, 500) is further configured to: when the terminal device (4, 500) determines that the length of the to-be-transmitted data is greater than or equal to a preset threshold, establish a connection to the CDN server (6, 700) based on the IP address of the CDN server (6, 700); and receive subsequent content of the to-be-transmitted data by using the connection with the CDN server.

## Patentansprüche

1. Lastenausgleichsverfahren, umfassend:
Senden (301), durch ein Endgerät, einer ersten Anforderungsnachricht an ein Lastenausgleichsgerät, wobei die erste Anforderungsnachricht verwendet wird, um zu übertragende Daten und eine Internetprotokolladresse, IP-Adresse, eines Content-Delivery-Netzwerkservers, CDN-Servers, der die zu übertragenden Daten bereitstellen kann, anzufordern;
Auswählen, durch das Lastenausgleichsgerät, für das Endgerät, eines CDN, welches das Endgerät bedienen kann, basierend auf einer Lastenausgleichsrichtlinie;
Senden, durch das Lastenausgleichsgerät, der ersten Anforderungsnachricht an den ausgewählten CDN-Server unter Verwendung eines IP-Tunnels;
Empfangen (304), durch das Endgerät, einer ersten Antwortnachricht, die durch den CDN-Server gesendet wird, wobei die erste Antwortnachricht eine Länge der zu übertragenden Daten und die IP-Adresse des CDN-Servers umfasst und eine Quell-IP-Adresse der ersten Antwortnachricht eine IP-Adresse des Lastenausgleichsgeräts ist; und
Senden, durch das Endgerät, eines Bestätigungspakets, ACK-Pakets, der ersten Antwortnachricht an das Lastenausgleichsgerät, wobei die IP-Zieladresse des ACK-Pakets die IP-Adresse des Lastenausgleichsgeräts ist,
Weiterleiten, durch das Lastenausgleichsgerät, des ACK-Pakets an den ausgewählten CDN-Server unter Verwendung des IP-Tunnels; wenn das Endgerät bestimmt, dass die Länge der zu übertragenden Daten größer als oder gleich einem voreingestellten Schwellenwert ist, Herstellen (305), durch das Endgerät, einer Verbindung zu dem CDN-Server basierend auf der IP-Adresse des CDN- Servers,
Empfangen, durch das Endgerät, nachfolgender Inhalte der zu übertragenden Daten unter Verwendung der Verbindung mit dem CDN-Server.

2. Lastenausgleichsverfahren nach Anspruch 1, wobei das Verfahren ferner Folgendes umfasst:
Senden (310), durch das Endgerät, einer Trennungsanforderung an das Lastenausgleichsgerät, wobei die Trennungsanforderung verwendet wird, um ein Trennen des Endgeräts von dem Lastenausgleichsgerät anzuweisen.

3. Lastenausgleichsverfahren nach Anspruch 1 oder 2, wobei das Verfahren, vor dem Herstellen (305), durch das Endgerät, einer Verbindung zu dem CDN-Server basierend auf der IP-Adresse des CDN-Servers ferner Folgendes umfasst:
Empfangen, durch das Endgerät, einer zweiten Antwortnachricht, die durch den CDN-Server gesendet wird, wobei die zweite Antwortnachricht einen Teil der zu übertragenden Daten umfasst und eine Quell-IP-Adresse der zweiten Antwortnachricht die IP-Adresse des Lastenausgleichsgeräts ist.

4. Lastenausgleichsverfahren nach einem der Ansprüche 1 bis 3, wobei das Verfahren, nach dem Herstellen (305), durch das Endgerät, einer Verbindung zu dem CDN-Server, ferner Folgendes umfasst:
Senden (306), durch das Endgerät, einer zweiten Anforderungsnachricht an den CDN-Server, wobei die zweite Anforderungsnachricht verwendet wird, um Daten, die zu den zu übertragenden Daten gehören und die nicht übertragen werden, anzufordern; und
Empfangen (307), durch das Endgerät, einer dritten Antwortnachricht, die durch den CDN-Server gesendet wird, wobei die dritte Antwortnachricht die Daten, die nicht übertragen werden, umfasst und eine Quell-IP-Adresse der dritten Antwortnachricht die IP-Adresse des CDN-Servers ist.

5. Lastenausgleichsverfahren nach Anspruch 4, wobei das Senden (306), durch das Endgerät, einer zweiten Anforderungsnachricht an den CDN-Server Folgendes umfasst:
Senden, durch das Endgerät, einer Hypertext-Übertragungsprotokoll-Erlangungsanforderung, HTTP-Erlangungsanforderung, an den CDN-Server, wobei die HTTP-Erlangungsanforderung eine Startposition der Daten, die zu den zu übertragenden Daten gehören und die nicht übertragen werden, umfasst.

6. Lastenausgleichsverfahren, das in einem Lastenausgleichsgerät ausgeführt wird, umfassend:
Empfangen (301), durch das Lastenausgleichsgerät, einer ersten Anforderungsnachricht, die durch ein Endgerät gesendet wird, wobei die erste Anforderungsnachricht verwendet wird, um zu übertragende Daten und eine Internetprotokolladresse, IP-Adresse, eines Content-Delivery-Netzwerkservers, CDN-Servers, der die zu übertragenden Daten bereitstellen kann, anzufordern; und
Auswählen, durch das Lastenausgleichsgerät, eines CDN-Servers, der das Endgerät bedienen kann, für das Endgerät gemäß einer Lastenausgleichsrichtlinie;
Senden (302), durch das Lastenausgleichsgerät, der ersten Anforderungsnachricht an den ausgewählten CDN-Server unter Verwendung eines IP-Tunnels;
Empfangen, durch das Lastenausgleichsgerät, eines Bestätigungspakets, ACK-Pakets, einer ersten Antwortnachricht, das durch das Endgerät an das Lastenausgleichsgerät gesendet wird, wobei die IP-Zieladresse des ACK-Pakets die IP-Adresse des Lastenausgleichsgeräts ist und wobei die erste Antwortnachricht durch den CDN-Server an das Endgerät gesendet wurde, wobei die erste Antwortnachricht eine Länge der zu übertragenden Daten und die IP-Adresse des SCN-Servers umfasst und eine Quell-IP-Adresse der ersten Antwortnachricht eine IP-Adresse des Lastenausgleichsgeräts ist;
Weiterleiten, durch das Lastenausgleichsgerät, des ACK-Pakets an den ausgewählten CDN-Server unter Verwendung des IP-Tunnels.

7. Lastenausgleichsverfahren nach Anspruch 6, wobei das Verfahren ferner Folgendes umfasst:
Empfangen (310), durch das Lastenausgleichsgerät, einer Trennungsanforderung, die durch das Endgerät gesendet wird, wobei die Trennungsanforderung verwendet wird, um ein Trennen des Endgeräts von dem Lastenausgleichsgerät anzuweisen; und Senden, durch das Lastenausgleichsgerät, einer Trennungsantwort an das Endgerät und Trennen einer Verknüpfung zwischen dem Lastenausgleichsgerät und dem Endgerät.

8. Endgerät (4), umfassend:
eine Sendeeinheit (401), die dazu konfiguriert ist, eine erste Anforderungsnachricht an ein Lastenausgleichsgerät zu senden, wobei die erste Anforderungsnachricht verwendet wird, um zu übertragende Daten und eine Internetprotokolladresse, IP-Adresse, eines Content-Delivery-Netzwerkservers, CDN-Servers, der die zu übertragenden Daten bereitstellen kann, anzufordern; eine Empfangseinheit (402), die dazu konfiguriert ist, eine erste Antwortnachricht zu empfangen, die durch den CDN-Server, der das Endgerät bedienen kann, gesendet wird, wobei die erste Antwortnachricht eine Länge der zu übertragenden Daten und die IP-Adresse des CDN-Servers umfasst und eine Quell-IP-Adresse der ersten Antwortnachricht eine IP-Adresse des Lastenausgleichsgeräts ist; und
die Sendeeinheit (401) ferner dazu konfiguriert ist, ein Bestätigungspaket, ACK-Paket, der ersten Antwortnachricht an das Lastenausgleichsgerät zu senden, wobei die IP-Zieladresse des ACK-Pakets die IP-Adresse des Lastenausgleichsgeräts ist,
eine Verarbeitungseinheit (403), die zu Folgendem konfiguriert ist: wenn die Verarbeitungseinheit (403) bestimmt, dass die Länge der zu übertragenden Daten größer als oder gleich einem voreingestellten Schwellenwert ist, Herstellen einer Verbindung zu dem CDN-Server basierend auf der IP-Adresse des CDN-Servers, die Empfangseinheit (402) ferner dazu konfiguriert ist, nachfolgende Inhalte der zu übertragenden Daten unter Verwendung der Verbindung mit dem CDN-Server zu empfangen.

9. Endgerät (4) nach Anspruch 8, wobei die Sendeeinheit (401) ferner zu Folgendem konfiguriert ist:
Senden einer Trennungsanforderung an das Lastenausgleichsgerät, wobei die Trennungsanforderung verwendet wird, um ein Trennen des Endgeräts (4) von dem Lastenausgleichsgerät anzuweisen.

10. Endgerät (4) nach Anspruch 8 oder 9, wobei die Empfangseinheit (402) ferner zu Folgendem konfiguriert ist: Empfangen einer zweiten Antwortnachricht, die durch den CDN-Server gesendet wird, wobei die zweite Antwortnachricht einen Teil der zu übertragenden Daten umfasst und eine Quell-IP-Adresse der zweiten Antwortnachricht die IP-Adresse des Lastenausgleichsgeräts ist.

11. Endgerät (4) nach einem der Ansprüche 8 bis 10, wobei die Sendeeinheit (401) ferner zu Folgendem konfiguriert ist:
Senden einer zweiten Anforderungsnachricht an den CDN-Server, wobei die zweite Anforderungsnachricht verwendet wird, um Daten, die zu den zu übertragenden Daten gehören und die nicht übertragen werden, anzufordern; und
die Empfangseinheit (402) ferner dazu konfiguriert ist, eine dritte Antwortnachricht, die durch den CDN-Server gesendet wird, zu empfangen, wobei die dritte Antwortnachricht die Daten, die nicht übertragen werden, umfasst und eine Quell-IP-Adresse der dritten Antwortnachricht die IP-Adresse des CDN-Servers ist.

12. Endgerät (4) nach Anspruch 11, wobei die Sendeeinheit (401) zu Folgendem konfiguriert ist:
Senden einer Hypertext-Übertragungsprotokoll-Erlangungsanforderung, HTTP-Erlangungsanforderung, an den CDN-Server, wobei die HTTP-Erlangungsanforderung eine Startposition der Daten, die zu den zu übertragenden Daten gehören und die nicht übertragen werden, umfasst.

13. Lastenausgleichsgerät (8), umfassend:
eine Empfangseinheit (801), die dazu konfiguriert ist, eine erste Anforderungsnachricht, die durch ein Endgerät gesendet wird, zu empfangen, wobei die erste Anforderungsnachricht verwendet wird, um zu übertragende Daten und eine Internetprotokolladresse, IP-Adresse, eines Content-Delivery-Netzwerkservers, CDN-Servers, der die zu übertragenden Daten bereitstellen kann, anzufordern; und
eine Sendeeinheit (802), die dazu konfiguriert ist, einen CDN-Server, der das Endgerät bedienen kann, für das Endgerät gemäß einer Lastenausgleichsrichtlinie auszuwählen und die erste Anforderungsnachricht unter Verwendung eines IP-Tunnels an den CDN-Server zu senden,
die Empfangseinheit (801) ferner dazu konfiguriert ist, ein Bestätigungspaket, ACK-Paket, einer ersten Antwortnachricht, das durch das Endgerät an das Lastenausgleichsgerät gesendet wird, zu empfangen, wobei die IP-Zieladresse des ACK-Pakets die IP-Adresse des Lastenausgleichsgeräts ist und wobei die erste Antwortnachricht durch den CDN-Server an das Endgerät gesendet wurde, wobei die erste Antwortnachricht eine Länge der zu übertragenden Daten und die IP-Adresse des SCN-Servers umfasst und eine Quell-IP-Adresse der ersten Antwortnachricht eine IP-Adresse des Lastenausgleichsgeräts ist;
die Sendeeinheit (802) ferner dazu konfiguriert ist, das ACK-Paket unter Verwendung des IP-Tunnels an den ausgewählten CDN-Server weiterzuleiten.

14. Lastenausgleichsgerät (8) nach Anspruch 13, wobei die Empfangseinheit (801) ferner zu Folgendem konfiguriert ist:
Empfangen einer Trennungsanforderung, die durch das Endgerät gesendet wird, wobei die Trennungsanforderung verwendet wird, um ein Trennen des Endgeräts von dem Lastenausgleichsgerät (8) anzuweisen; und
die Sendeeinheit (802) ferner zu Folgendem konfiguriert ist: Senden einer Trennungsantwort an das Endgerät und Trennen einer Verknüpfung zwischen dem Lastenausgleichsgerät (8) und dem Endgerät unter Verwendung einer Verarbeitungseinheit (803).

15. Lastenausgleichssystem, umfassend ein Endgerät (4, 500), ein Lastenausgleichsgerät (8, 900) und einen Content-Delivery-Netzwerkserver, CDN-Server, (6, 700), wobei:
das Endgerät (4, 500) dazu konfiguriert ist, eine erste Anforderungsnachricht an das Lastenausgleichsgerät (8, 900) zu senden, wobei die erste Anforderungsnachricht verwendet wird, um zu übertragende Daten und eine Internetprotokolladresse, IP-Adresse, des CDN-Servers (6, 700), der die zu übertragenden Daten bereitstellen kann, anzufordern;
das Lastenausgleichsgerät (8, 900) dazu konfiguriert ist, die erste Anforderungsnachricht, die durch das Endgerät (4, 500) gesendet wird, zu empfangen;
das Lastenausgleichsgerät (8, 900) ferner dazu konfiguriert ist, einen CDN-Server, der das Endgerät bedienen kann, für das Endgerät gemäß einer Lastenausgleichsrichtlinie auszuwählen und die erste Anforderungsnachricht unter Verwendung eines IP-Tunnels an den ausgewählten CDN-Server (6, 700) zu senden;
der CDN-Server (6, 700) dazu konfiguriert ist, die erste Anforderungsnachricht, die durch das Lastenausgleichsgerät (8, 900) gesendet wird, zu empfangen;
der CDN-Server (6, 700) ferner dazu konfiguriert ist, eine erste Antwortnachricht an das Endgerät (4, 500) zu senden, wobei die erste Antwortnachricht eine Länge der zu übertragenden Daten und die IP-Adresse des CDN-Servers (6, 700) umfasst und eine Quell-IP-Adresse der ersten Antwortnachricht eine IP-Adresse des Lastenausgleichsgeräts (8, 900) ist;
das Endgerät (4, 500) ferner dazu konfiguriert ist, die erste Antwortnachricht, die durch den CDN-Server (6, 700) gesendet wird, zu empfangen; und
das Endgerät (4, 500) ferner dazu konfiguriert ist, ein Bestätigungspaket, ACK-Paket, der ersten Antwortnachricht an das Lastenausgleichsgerät zu senden, wobei die IP-Zieladresse des ACK-Pakets die IP-Adresse des Lastenausgleichsgeräts ist,
das Lastenausgleichsgerät (8, 900) ferner dazu konfiguriert ist, das ACK-Paket unter Verwendung des IP-Tunnels an den ausgewählten CDN-Server weiterzuleiten;
das Endgerät (4, 500) ferner zu Folgendem konfiguriert ist: wenn das Endgerät (4, 500) bestimmt, dass die Länge der zu übertragenden Daten größer als oder gleich einem voreingestellten Schwellenwert ist, Herstellen einer Verbindung zu dem CDN-Server (6, 700) basierend auf der IP-Adresse des CDN-Servers (6, 700); und Empfangen nachfolgender Inhalte der zu übertragenden Daten unter Verwendung der Verbindung mit dem CDN-Server.

## Revendications

1. Procédé d'équilibrage de charge, comprenant :
l'envoi (301), par un dispositif terminal, d'un premier message de demande à un dispositif d'équilibrage de charge, dans lequel le premier message de demande est utilisé pour demander des données à transmettre et une adresse de protocole Internet, IP, d'un serveur de réseau de diffusion de contenu, CDN, qui peut fournir les données à transmettre ;
la sélection, par le dispositif d'équilibrage de charge, pour le dispositif terminal sur la base d'une politique d'équilibrage de charge, d'un CDN qui peut desservir le terminal ;
l'envoi, par le dispositif d'équilibrage de charge, du premier message de demande au serveur CDN sélectionné à l'aide d'un tunnel IP ;
la réception (304), par le dispositif terminal, d'un premier message de réponse envoyé par le serveur CDN, dans lequel le premier message de réponse comprend une longueur des données à transmettre et l'adresse IP du serveur CDN, et une adresse IP source du premier message de réponse est une adresse IP du dispositif d'équilibrage de charge ; et
l'envoi, par le dispositif terminal, d'un paquet d'accusé de réception, ACK, du premier message de réponse au dispositif d'équilibrage de charge, dans lequel l'adresse IP de destination du paquet ACK est l'adresse IP du dispositif d'équilibrage de charge,
la transmission, par le dispositif d'équilibrage de charge, du paquet ACK au serveur CDN sélectionné à l'aide du tunnel IP ; lorsque le dispositif terminal détermine le fait que la longueur des données à transmettre est supérieure ou égale à un seuil prédéfini, l'établissement (305), par le dispositif terminal, d'une connexion au serveur CDN sur la base de l'adresse IP du serveur CDN,
la réception, par le dispositif terminal, du contenu ultérieur des données à transmettre à l'aide de la connexion avec le serveur CDN.

2. Procédé d'équilibrage de charge selon la revendication 1, dans lequel le procédé comprend également :
l'envoi (310), par le dispositif terminal, d'une demande de déconnexion au dispositif d'équilibrage de charge, dans lequel la demande de déconnexion est utilisée pour demander de déconnecter le dispositif terminal du dispositif d'équilibrage de charge.

3. Procédé d'équilibrage de charge selon la revendication 1 ou 2, dans lequel avant l'établissement (305), par le dispositif terminal, d'une connexion au serveur CDN sur la base de l'adresse IP du serveur CDN, le procédé comprend également :
la réception, par le dispositif terminal, d'un deuxième message de réponse envoyé par le serveur CDN, dans lequel le deuxième message de réponse comprend une partie des données à transmettre, et une adresse IP source du deuxième message de réponse est l'adresse IP du dispositif d'équilibrage de charge.

4. Procédé d'équilibrage de charge selon l'une quelconque des revendications 1 à 3, dans lequel après l'établissement (305), par le dispositif terminal, d'une connexion au serveur CDN, le procédé comprend également :
l'envoi (306), par le dispositif terminal, d'un second message de demande au serveur CDN, dans lequel le second message de demande est utilisé pour demander des données qui se trouvent dans les données à transmettre et qui ne sont pas transmises ; et
la réception (307), par le dispositif terminal, d'un troisième message de réponse envoyé par le serveur CDN, dans lequel le troisième message de réponse comprend les données qui ne sont pas transmises, et une adresse IP source du troisième message de réponse est l'adresse IP du serveur CDN.

5. Procédé d'équilibrage de charge selon la revendication 4, dans lequel l'envoi (306), par le dispositif terminal, d'un second message de demande au serveur CDN comprend :
l'envoi, par le dispositif terminal, d'une demande d'obtention de protocole de transfert hypertexte, HTTP, au serveur CDN, dans lequel la demande d'obtention HTTP comprend une position de départ des données qui se trouvent dans les données à transmettre et qui ne sont pas transmises.

6. Procédé d'équilibrage de charge réalisé dans un dispositif d'équilibrage de charge, comprenant :
la réception (301), par le dispositif d'équilibrage de charge, d'un premier message de demande envoyé par un dispositif terminal, dans lequel le premier message de demande est utilisé pour demander des données à transmettre et une adresse de protocole Internet, IP, d'un serveur de réseau de diffusion de contenu, CDN, qui peut fournir les données à transmettre ; et la sélection, par le dispositif d'équilibrage de charge, pour le dispositif terminal selon une politique d'équilibrage de charge, d'un serveur CDN qui peut desservir le dispositif terminal ;
l'envoi (302), par le dispositif d'équilibrage de charge, du premier message de demande au serveur CDN sélectionné à l'aide d'un tunnel IP ;
la réception, par le dispositif d'équilibrage de charge, d'un paquet d'accusé de réception, ACK, envoyé par le dispositif terminal, d'un premier message de réponse au dispositif d'équilibrage de charge, dans lequel l'adresse IP de destination du paquet ACK est l'adresse IP du dispositif d'équilibrage de charge et dans lequel le premier message de réponse a été envoyé par le serveur CDN au dispositif terminal, dans lequel le premier message de réponse comprend une longueur des données à transmettre et l'adresse IP du serveur SCN, et une adresse IP source du premier message de réponse est une adresse IP du dispositif d'équilibrage de charge ;
la transmission, par le dispositif d'équilibrage de charge, du paquet ACK au serveur CDN sélectionné à l'aide du tunnel IP.

7. Procédé d'équilibrage de charge selon la revendication 6, dans lequel le procédé comprend également :
la réception (310), par le dispositif d'équilibrage de charge, d'une demande de déconnexion envoyée par le dispositif terminal, dans lequel la demande de déconnexion est utilisée pour demander de déconnecter le dispositif terminal du dispositif d'équilibrage de charge ; et
l'envoi, par le dispositif d'équilibrage de charge, d'une réponse de déconnexion au dispositif terminal, et la déconnexion d'une liaison entre le dispositif d'équilibrage de charge et le dispositif terminal.

8. Dispositif terminal (4), comprenant :
une unité d'envoi (401), configurée pour envoyer un premier message de demande à un dispositif d'équilibrage de charge, dans lequel le premier message de demande est utilisé pour demander des données à transmettre et une adresse de protocole Internet, IP, d'un serveur de réseau de diffusion de contenu, CDN, qui peut fournir les données à transmettre ;
une unité de réception (402), configurée pour recevoir un premier message de réponse envoyé par le serveur CDN qui peut desservir le dispositif terminal, dans lequel le premier message de réponse comprend une longueur des données à transmettre et l'adresse IP du serveur CDN, et une adresse IP source du premier message de réponse est une adresse IP du dispositif d'équilibrage de charge ; et
l'unité d'envoi (401) est également configurée pour envoyer un paquet d'accusé de réception, ACK, du premier message de réponse au dispositif d'équilibrage de charge, dans lequel l'adresse IP de destination du paquet ACK est l'adresse IP du dispositif d'équilibrage de charge,
une unité de traitement (403), configurée pour : lorsque l'unité de traitement (403) détermine le fait que la longueur des données à transmettre est supérieure ou égale à un seuil prédéfini, établir une connexion au serveur CDN sur la base de l'adresse IP du serveur CDN,
l'unité de réception (402) est également configurée pour recevoir le contenu ultérieur des données à transmettre à l'aide de la connexion avec le serveur CDN.

9. Dispositif terminal (4) selon la revendication 8, dans lequel l'unité d'envoi (401) est également configurée pour :
envoyer une demande de déconnexion au dispositif d'équilibrage de charge, dans lequel la demande de déconnexion est utilisée pour demander de déconnecter le dispositif terminal (4) du dispositif d'équilibrage de charge.

10. Dispositif terminal (4) selon la revendication 8 ou 9, dans lequel l'unité de réception (402) est également configurée pour :
recevoir un deuxième message de réponse envoyé par le serveur CDN, dans lequel le deuxième message de réponse comprend une partie des données à transmettre, et une adresse IP source du deuxième message de réponse est l'adresse IP du dispositif d'équilibrage de charge.

11. Dispositif terminal (4) selon l'une quelconque des revendications 8 à 10, dans lequel l'unité d'envoi (401) est également configurée pour :
envoyer un second message de demande au serveur CDN, dans lequel le second message de demande est utilisé pour demander des données qui se trouvent dans les données à transmettre et qui ne sont pas transmises ; et
l'unité de réception (402) est également configurée pour recevoir un troisième message de réponse envoyé par le serveur CDN, dans lequel le troisième message de réponse comprend les données qui ne sont pas transmises, et une adresse IP source du troisième message de réponse est l'adresse IP du serveur CDN.

12. Dispositif terminal (4) selon la revendication 11, dans lequel l'unité d'envoi (401) est configurée pour :
envoyer une demande d'obtention de protocole de transfert hypertexte, HTTP, au serveur CDN, dans lequel la demande d'obtention HTTP comprend une position de départ des données qui se trouvent dans les données à transmettre et qui ne sont pas transmises.

13. Dispositif d'équilibrage de charge (8), comprenant :
une unité de réception (801), configurée pour recevoir un premier message de demande envoyé par un dispositif terminal, dans lequel le premier message de demande est utilisé pour demander des données à transmettre et une adresse de protocole Internet, IP, d'un serveur de réseau de diffusion de contenu, CDN, qui peut fournir les données à transmettre ; et
une unité d'envoi (802), configurée pour sélectionner, pour le dispositif terminal selon une politique d'équilibrage de charge, un serveur CDN qui peut desservir le dispositif terminal, et envoyer le premier message de demande au serveur CDN à l'aide d'un tunnel IP,
l'unité de réception (801), configurée également pour recevoir un paquet d'accusé de réception, ACK, envoyé par le dispositif terminal, d'un premier message de réponse au dispositif d'équilibrage de charge, dans lequel l'adresse IP de destination du paquet ACK est l'adresse IP du dispositif d'équilibrage de charge et dans lequel le premier message de réponse a été envoyé par le serveur CDN au dispositif terminal, dans lequel le premier message de réponse comprend une longueur des données à transmettre et l'adresse IP du serveur SCN, et une adresse IP source du premier message de réponse est une adresse IP du dispositif d'équilibrage de charge ;
l'unité d'envoi (802) est également configurée pour transmettre le paquet ACK au serveur CDN sélectionné à l'aide du tunnel IP.

14. Dispositif d'équilibrage de charge (8) selon la revendication 13, dans lequel l'unité de réception (801) est également configurée pour :
recevoir une demande de déconnexion envoyée par le dispositif terminal, dans lequel la demande de déconnexion est utilisée pour demander de déconnecter le dispositif terminal du dispositif d'équilibrage de charge (8) ; et
l'unité d'envoi (802) est également configurée pour : envoyer une réponse de déconnexion au dispositif terminal, et déconnecter une liaison entre le dispositif d'équilibrage de charge (8) et le dispositif terminal à l'aide d'une unité de traitement (803).

15. Système d'équilibrage de charge, comprenant un dispositif terminal (4, 500), un dispositif d'équilibrage de charge (8, 900) et un serveur de réseau de distribution de contenu, CDN, (6, 700), dans lequel :
le dispositif terminal (4, 500) est configuré pour envoyer un premier message de demande au dispositif d'équilibrage de charge (8, 900), dans lequel le premier message de demande est utilisé pour demander des données à transmettre et une adresse de protocole Internet, IP, du serveur CDN (6, 700) qui peut fournir les données à transmettre ;
le dispositif d'équilibrage de charge (8, 900) est configuré pour recevoir le premier message de demande envoyé par le dispositif terminal (4, 500) ;
le dispositif d'équilibrage de charge (8, 900) est également configuré pour sélectionner, pour le dispositif terminal selon une politique d'équilibrage de charge, un serveur CDN qui peut desservir le dispositif terminal, et envoyer le premier message de demande au serveur CDN sélectionné (6, 700) à l'aide d'un tunnel IP ;
le serveur CDN (6, 700) est configuré pour recevoir le premier message de demande envoyé par le dispositif d'équilibrage de charge (8, 900) ;
le serveur CDN (6, 700) est également configuré pour envoyer un premier message de réponse au dispositif terminal (4, 500), dans lequel le premier message de réponse comprend une longueur des données à transmettre et l'adresse IP du serveur CDN (6, 700), et une adresse IP source du premier message de réponse est une adresse IP du dispositif d'équilibrage de charge (8, 900) ;
le dispositif terminal (4, 500) est également configuré pour recevoir le premier message de réponse envoyé par le serveur CDN (6, 700) ; et
le dispositif terminal (4, 500) est également configuré pour envoyer un paquet d'accusé de réception, ACK, du premier message de réponse au dispositif d'équilibrage de charge, dans lequel l'adresse IP de destination du paquet ACK est l'adresse IP du dispositif d'équilibrage de charge,
le dispositif d'équilibrage de charge (8, 900) est également configuré pour transmettre le paquet ACK au serveur CDN sélectionné à l'aide du tunnel IP ;
le dispositif terminal (4, 500) est également configuré pour : lorsque le dispositif terminal (4, 500) détermine le fait que la longueur des données à transmettre est supérieure ou égale à un seuil prédéfini, établir une connexion au serveur CDN (6, 700) sur la base de l'adresse IP du serveur CDN (6, 700) ; et recevoir le contenu ultérieur des données à transmettre à l'aide de la connexion avec le serveur CDN.
